# EUROPEAN PATENT APPLICATION

(11) **EP 4 481 453 A1**
(43) Date of publication of application: **25.12.2024**
(21) Application number: 24182436.6
(22) Date of filing: 14.06.2024
(51) Int. Cl.: G02B 6/44, G02B 6/38

(54) **FIBER OPTIC CABLE FASTENER ASSEMBLY**

(30) Priority: 22.06.2023 US 202363509621 P; 22.06.2023 US 202363522556 P
(71) Applicant: AFL Telecommunications LLC, Duncan, SC 29334 (US)
(72) Inventor: Davidson, Aran James Russell, Duncan, 29334 (US); Raven, Asher Leong, Duncan, 29334 (US)
(74) Representative: Serjeants LLP

(57) **Abstract**

A fastener assembly and a method for cable retention and connector fastening for a fiber optic cable is provided. The fastener assembly includes a collar (210) having a threaded shank extending along an axial direction from a collar platform. The threaded shank includes a passage formed therethrough from a first end (248) to a second end (249) along the axial direction. The collar (250) includes a slot (254) extending along the axial direction from the first end (248) toward the collar platform (260). A fastener (188) includes an internally threaded passage (282) configured to engage the threaded shank at the collar (210). The slot (254) is positioned between the passage at the collar (210) and the internally threaded passage (282) at the fastener (188) when engaged to the threaded shank at the collar (210).

## Description

### PRIORITY STATEMENT

The present application claims the benefit of priority to U.S. provisional patent application number 63/522,556 filed on June 22, 2023, titled "OPTICAL FIBER SPLICE AND CONNECTION CASSETTE", and U.S. provisional patent application number 63/509,621 filed on June 22, 2023, titled "OPTICAL FIBER SPLICE AND CONNECTION FASTENER", the disclosures of which are incorporated herein by reference in their entireties.

### FIELD

The present disclosure relates generally to structures and methods fiber optic telecommunications fastening, splicing, and routing.

### BACKGROUND

A common scenario in fiber optic telecommunications is performing splices at optical fibers and securing optical fibers to a module. Optical connection points may transition from a fiber optic cable to a fiber optic connection within a module. However, connecting fasteners and routing fibers through fasteners may form pinch-points that may shear or otherwise damage fiber optic leads.

An optical fiber splice and connection fastener addressing one or more aforementioned issues would be advantageous and beneficial.

### BRIEF DESCRIPTION

Aspects and advantages of the invention will be set forth in part in the following description, or may be understood from the description, or may be learned through practice of the invention.

An aspect of the present disclosure is directed to a fastener assembly for a fiber optic cable. The fastener assembly includes a collar having a threaded shank extending along an axial direction from a collar platform. The threaded shank includes a passage formed therethrough from a first end to a second end along the axial direction. The collar includes a slot extending along the axial direction from the first end toward the collar platform. A fastener includes an internally threaded passage configured to engage the threaded shank at the collar. The slot is positioned between the passage at the collar and the internally threaded passage at the fastener when engaged to the threaded shank at the collar.

A groove may be formed at the platform extending radially outward from the passage.

The fastener may comprise a fastener platform, wherein the fastener platform and the collar platform form a radially extending interface between the fastener platform and the collar platform.

The groove may extend at a flat interface at which the fastener platform and the collar platform abut one another.

An axially extending groove may be formed between a pair of the fastener platforms separated along the axial direction.

The collar platform may comprise a curved edge along the groove.

The fastener may form a nut comprising the internally threaded passage.

The threaded shank may extend along the axial direction toward the first end and the second end from the collar platform.

The collar platform may form a polygonal head.

Another aspect of the present disclosure is directed to a method for cable retention and connector fastening for a fiber optic cable. The fiber optic cable includes an outer jacket through which a strength member and a fiber extend. The method includes extending the fiber optic cable through an axially-extending passage of a collar having a threaded shank extending along an axial direction from a collar platform; separating the outer jacket from the strength member and the fiber; extending the fiber through an internally threaded passage at a fastener configured to thread onto the threaded shank at the collar; separating the strength member from the fiber to position the strength member outside of the internally threaded passage at the fastener; extending the strength member along a groove at the collar platform; and forming a radially extending flat interface at which the collar platform and a fastener platform abut one another and positions the strength member at the groove therebetween.

The method may comprise threading the fastener onto the collar and extending the fiber along the axial direction from a second end through a first end.

The method may comprise positioning the outer jacket within the passage at the collar after separating the strength member from the fiber.

The method may comprise attaching the fastener to a fiber optic module via an axially extending groove positioned between a pair of fastener platforms separated from one another along the axial direction.

The method may comprise extending a boot of the fiber optic cable over the threaded shank extending from the collar platform toward the second end.

Extending the fiber optic cable through the axially-extending passage of the collar may comprise extending the fiber optic cable through a second end and through the passage and egress through a first end.

Yet another aspect of the present disclosure is directed to a method for cable retention and connector fastening for a fiber optic cable. The fiber optic cable includes an outer jacket through which a strength member and a fiber extend. The method includes extending the fiber optic cable through an axially-extending passage of a collar having a threaded shank extending along an axial direction from a collar platform; separating the outer jacket from the strength member and the fiber; extending the fiber through an internally threaded passage at a fastener configured to thread onto the threaded shank at the collar; separating the strength member from the fiber to position the strength member outside of the internally threaded passage at the fastener; extending the strength member along a slot extending along the axial direction, the slot extending through the threaded shank; and threading the fastener onto the threaded shank at the collar to position the strength member through the slot and between the passage and internal threads at the fastener.

The method may comprise positioning the outer jacket within the passage at the collar after separating the strength member from the fiber.

The method may comprise attaching the fastener to a fiber optic module via an axially extending groove positioned between a pair of fastener platforms separated from one another along the axial direction.

The method may comprise extending a boot of the fiber optic cable over the threaded shank extending from the collar platform toward the second end.

Extending the fiber optic cable through the axially-extending passage of the collar may comprise extending the fiber optic cable through a second end and through the passage and egress through a first end.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
Fig. 1 depicts an exemplary method for routing a cable into an embodiment of the cassette in accordance with aspects of the present disclosure;
Fig. 2 provides a perspective view of an internal view of an embodiment of the telecommunications cassette in accordance with aspects of the present disclosure;
Fig. 3 provides a plan view of an exemplary cable routing at a first volume of an embodiment of the cassette in accordance with aspects of the present disclosure;
Fig. 4 provides an embodiment of a fastener assembly for a fiber optic cable and steps of a method for cable assembly to a cassette in accordance with aspects of the present disclosure;
Fig. 5 provides an embodiment of a fastener assembly for a fiber optic cable and steps of a method for cable assembly to a cassette in accordance with aspects of the present disclosure;
Fig. 6 provides an embodiment of a fastener assembly for a fiber optic cable and steps of a method for cable assembly to a cassette in accordance with aspects of the present disclosure;
Fig. 7 provides an embodiment of a fastener assembly for a fiber optic cable and steps of a method for cable assembly to a cassette in accordance with aspects of the present disclosure;
Fig. 8 provides a cross-sectional view of an exemplary embodiment of the fastener assembly at the fiber optic cable;
Fig. 9 provides a perspective view of an exemplary embodiment of the fastener assembly at the fiber optic cable; and
Fig. 10 provides a flowchart outlining exemplary steps of a method for fiber optic cable fastening and retention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Embodiments of an optical fiber splice and connection fastener addressing one or more aforementioned issues are provided. Embodiments provided herein include a method for installing a connection fastener to an optical fiber connection. An optical fiber module is provided at which the connection fastener may be attached. The module may include optical fiber adapters (e.g., but not limited to, LC, SC, MPO, MDC, SN, etc. adapters), internal optical fiber pigtails, separated internal and external fiber slack storage areas (e.g., positioned at opposite sides of the cassette), cable strain relief fixing point(s), front and rear entry/exit for fiber optic cables.

An optical fiber cassette 100 includes a main body 110 configured to retain fiber optic adapter wall 130 (e.g., wall 130 including a plurality of fiber optic adapters) and form a fiber slack storage area 140. The main body 110 includes a pair of sidewalls 108 extending along a length L. The main body 110 includes an end wall 106 extending between the sidewalls 108 along a width W. The end wall 106 and the sidewalls 108 extend along a height H. It should be appreciated that the length L, the width W, and the height H may extend along mutually orthogonal axes. The length L of sidewalls 108 may generally extend greater than the width W of the end wall 106. The height H of the sidewalls 108 and end wall 106 may generally extend less than the width W or the length L. The adapter wall 130 extends along width W between sidewalls 108. The end wall 106 is positioned opposite along the length L of the adapter wall 130.

In various embodiments, the main body 110 may form a unitary, monolithic component. For instance, the main body 110 may be formed as a single molded main body. Any appropriate manufacturing method may be utilized to form the main body 110 as a unitary, monolithic component, such as, but not limited to, molding, extrusion, or additive manufacturing.

The main body 110 includes a partition wall 118 extending between the sidewalls 108, end wall 106, and adapter wall 130. The partition wall 118 is positioned between the covers 120 forming the top wall and base wall. For instance, the partition wall 118 is positioned along height H between a top lip 109A and a bottom lip 109B of the sidewalls 108.

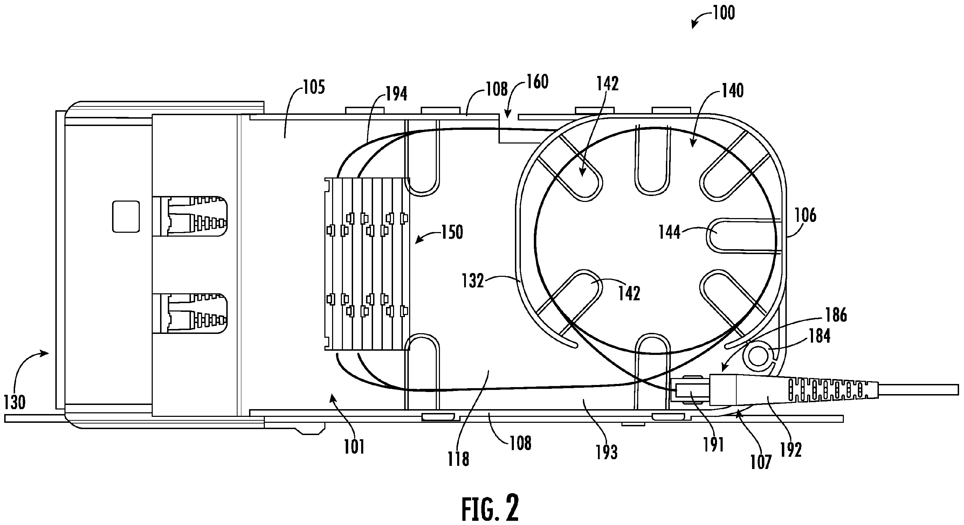

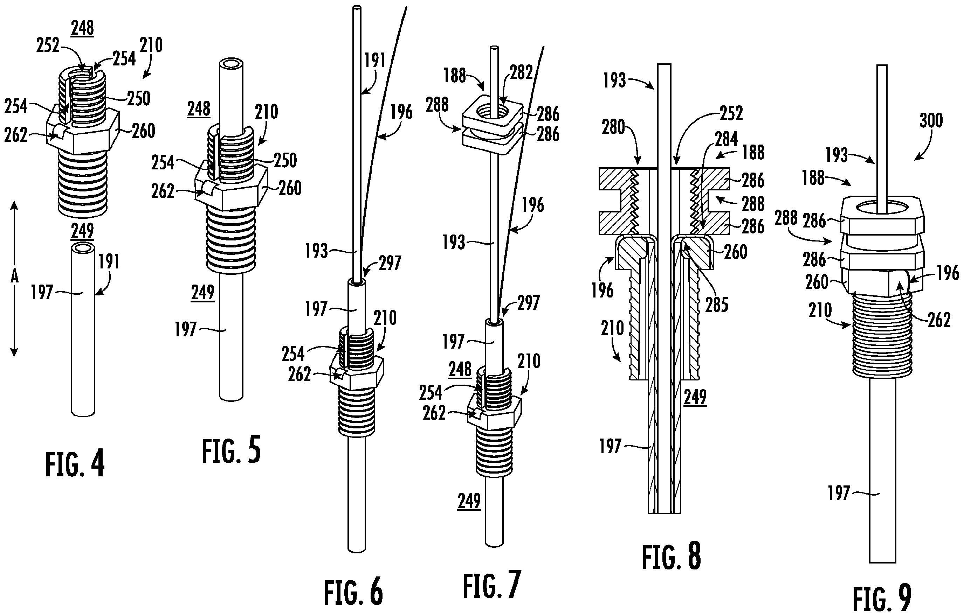

In still various embodiments, an adapter base wall 116 extends along the width W between the sidewalls 108 and partially along length L corresponding to the adapter wall 130. For instance, the adapter wall 130 may form a bank of a plurality of adapters positioned between a pair of adapter base walls 116. For instance, referring to Fig. 2, a first adapter base wall 116A extends between sidewalls 108 from a top portion (e.g., top lip along height H) of the sidewall 108. Referring to Fig. 4, a second adapter base wall 116B extends between sidewalls 108 from a bottom portion (e.g., bottom lip along height H) of the sidewall 108. In various embodiments, a cable entry passage 117 is formed at the adapter base wall 116. The passage 117 extends substantially along length L to allow an external cable to enter an internal volume of the cassette 100, such as further described herein and depicted in regard to Fig. 15.

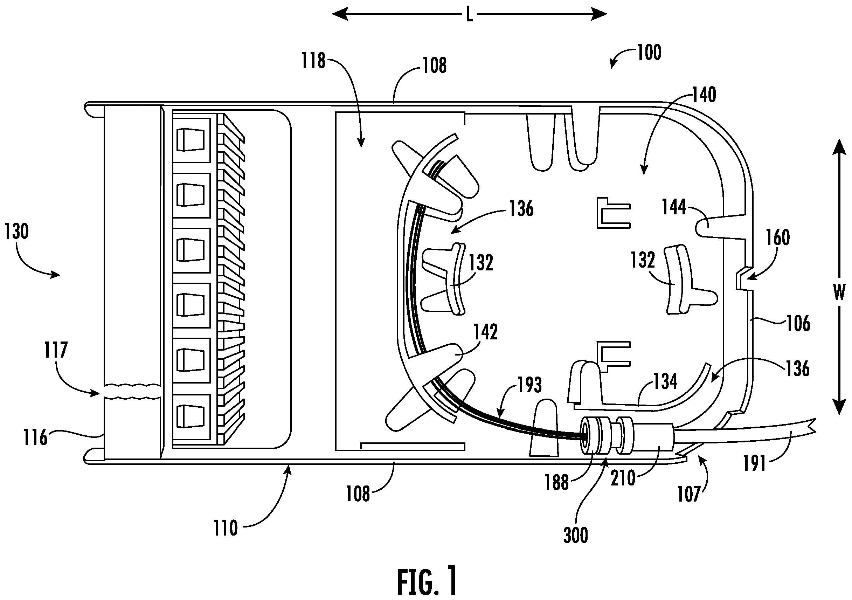

In various embodiments, sidewalls 108, end wall 106, and adapter wall 130, form a volume at partition wall 118 at which splices, leads, and other operable components are stored and secured. Referring to Figs. 1-2, embodiments of the storage area 140 include an internal wall 132 partially partitioning the storage area 140 at which fiber leads may extend, wound, affix, or arrange (e.g., in loops, racetracks, figure-eight formation, etc.). For instance, the internal wall 132 may extend along height H from the partition wall 118. A tab 142 extends from the internal wall 132, such as parallel to the partition wall 118, or forming a hook, arc, finger, or other member at which fiber leads are restrained or confined to the storage area 140. In some embodiments, a tab 144 extends into the volume 101, 102 from sidewall 108, end wall 106, or both.

In some embodiments, internal walls 132 form a passage 136 through which fiber leads may extend and arrange. For instance, a pair or more of internal walls 132 may form the passage 136 as a walled racetrack or conduit through which fiber leads may be positioned. In still some embodiments, the passage 136 is formed between the internal wall 132 and one or more of the end wall 106, the sidewall 108, or both. Tab 142 may extend into the passage 136, such as may extend from one or more internal walls 132 forming the passage 136, or between the internal wall 132 and the end wall 106 or sidewall 108.

In various embodiments, a splice holder 150 is selectively positioned at the partition wall 118. Referring to Fig. 2, the splice holder 150 may be configured for fiber ribbon slack or discrete fiber leads. However, it should be appreciated that other configurations of splice holder 150 may be included at the storage area 140. In some embodiments, the splice holder 150 is positioned within the storage area 140, such as adjacent to the end wall 106. In still some embodiments, the splice holder 150 is positioned between the storage area 140 and the adapter wall 130, such as adjacent to the transition wall 105.

Embodiments of the cassette 100 facilitate and allow storage and organization of splice protection sleeves for splicing between internal pigtails (e.g., leads 194) and external cable 191. Various embodiments of the cassette 100 may include splice holder 150. The splice holder 150 may be configured for single discrete splices or multi-fiber ribbon splices. Various embodiments of the main body 110 allow for an interchangeable modular splice holder 150 at which the single discrete splice or multi-fiber ribbon splice may be received.

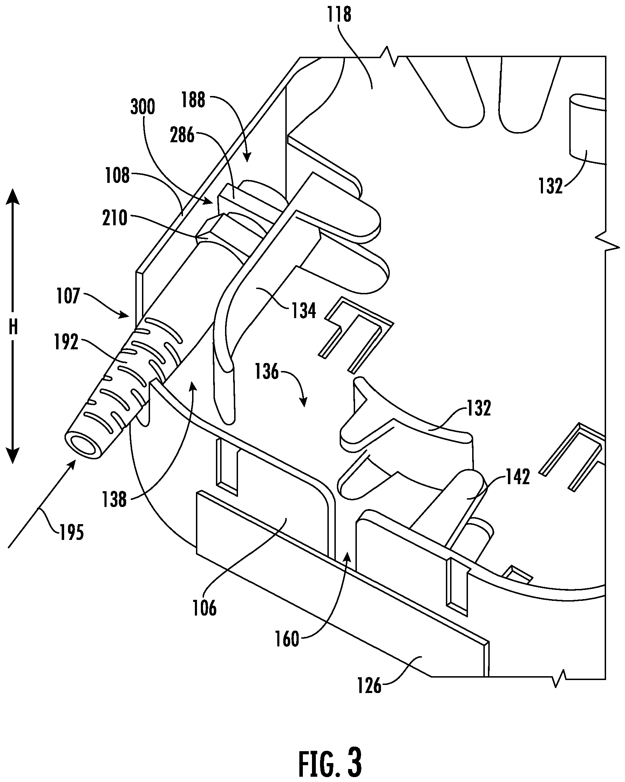

Referring to Fig. 3, a cable ingress/egress opening 107 is formed at the sidewall 108, the end wall 106, or a transition between the sidewall 108 and the end wall 106 (e.g., at a corner connecting the sidewall 108 and end wall 106). Embodiments of the cable ingress/egress opening 107 may be formed extending into a volume bounded by the partition wall 118. The opening 107 is configured to receive a cable 191 into the cassette 100. The cable 191 may include a boot 192 (e.g., a strain relief boot, cable bend relief boot, or other sleeve, covering, or outer material). An internal wall 134 may extend co-directional to a direction of extension (depicted schematically in Fig. 3 at arrow 195) of the cable 191 through the cable ingress/egress opening 107. The internal wall 134 and sidewall 108 may form a cable entry passage 138 through which the cable 191, the boot 192, or both are extended into the cassette 100. In some embodiments, a fastener 188 is selectively positioned at the cable 191 or the boot 192, such as to fasten, tie down, or otherwise retain the cable 191, or portions thereof, at the cable entry passage 138.

In various embodiments, a passthrough opening 160 is formed through the partition wall 118 to allow the fiber leads 194 to egress from proximate to a first side of the partition wall 118 to proximate to a second side of the partition wall 118 (i.e., separated along height H). In some embodiments, the passthrough opening 160, or a portion thereof, is formed through the sidewall 108 adjacent to the portion at the partition wall 118. In still some embodiments, the passthrough opening 160, or a portion thereof, is formed through the end wall 106 adjacent to the portion at the partition wall 118.

Referring now to Figs. 4-9, in various embodiments, external cable 191 is affixed to the main body 101 using a collar 210 (e.g., a threaded collar) extending around the cable 191, such as including outer jacket 197, fiber 193 and strength member 196 (e.g., aramid or e-glass strength member), and locked in place with fastener 188 (e.g., a nut or other appropriate retainer). A method for assembly may include inserting the cable 191 through the collar 210. The method includes locking the cable 191, such as including fiber 193 and strength member 196, in place with fastener 188. The method may include fitting and/or retaining the fastener 188 onto the main body 110. For instance, the fastener 188 may be affixed to the main body 110 at the passage 138 or fastener mount location 186.

Figs. 4-9 depict steps of a method for cable retention and connector fastening for a fiber optic cable, such as for embodiments of a fiber fastener assembly 300 provided herein. The fastener assembly 300 includes embodiments of the collar 210 and fastener 188. In various embodiments, the cable 191 includes outer jacket 197, fiber 193 and strength member 196 (e.g., aramid or e-glass strength member), such as may be included with fiber optic cable assemblies. The collar 210 includes a threaded shank 250 extending from one or both directions along an axial direction A from a platform 260. The platform 260 may form a head, such as a polygonal (e.g., hexagonal, or other multi-faceted body). The threaded shank 250 includes a passage 252 formed therethrough to allow the cable 191, or portions thereof, to extend through the threaded shank 250. Passage 252 may extend between ends 248, 249 of the collar 210 separated along the axial direction A. For instance, the collar 210 extending around the outer jacket 197 has the threaded shank 250 extending co-directional to an extension of the outer jacket 197 along the axial direction A. A first end 248 may form an end through which the cable 191 egresses from the collar 210. A second end 249 may form an end through which the cable 191 enters into the collar 210 to then egress from the first end 248.

Referring particularly to Fig. 4, the collar 210 includes a slot 254 extending along the axial direction A. The slot 254 may extend from the first end 248, such as to extend from the exit end of the collar 210 toward the platform 260. The slot 254 extends through the threaded shank 250, such as to allow for a portion of the cable 191 to extend from the passage 252 internal to the collar 210 to external from the collar 210. In various embodiments, a method for cable retention includes extending the strength member 196 through the slot 254, such as to allow for space or separation of the strength member 196 from the fiber 193 exiting the passage 252 at the first end 248.

Referring to Figs. 7-9, embodiments of the fastener 188 may form a nut including an internally threaded passage 282 configured to engage the outer threads of the threaded shank 250 at the collar 210. As depicted in Fig. 8, the threads may together mate at a threaded interface 280 (Fig. 8) extending from the platform 260 toward the end (e.g., first end 248) of the collar 210.

In various embodiments, the fastener 188 includes one or more radially extending platforms 286. The radially extending platforms 260, 286 have a flat radially extending interface 284 between the platforms 260, 286, such as to allow the fastener 188 to rest flush or substantially flush to the collar 210 at the platforms 260, 286. In some embodiments, a groove 288 is formed between a pair of platforms 286, such as to allow a tab, member, bracket, or other feature at a casing or body to extend into the groove 288 to retain the assembly 300 to the casing or body.

In still various embodiments, the collar 210 includes a groove 262 formed at the platform 260. The groove 262 extends along platform 260 at the interface 284, such as to allow a portion of the cable 191, such as the strength member 196, to extend into the groove 262, such as depicted in Fig. 8. A method for cable retention may include separating the strength member 196 from the fibers 193 and extending the strength member 196 along groove 262. The method may include threading the fastener 188 onto the threaded shank 250 to position the platforms 260, 286 flush or substantially flush to one another. The strength member 196 extending through the groove 262 may allow the platforms 260, 286 to abut one another flush at the interface 284. Curved edges 285 at the platform 260 may further facilitate extension of the portion of the cable 191 into the groove 262 while preventing shearing of the portion of the cable 191 (e.g., the strength member 196). The method may include separating the strength member 196 from the fiber 193 via routing the strength member 196 through the groove 262 and the fibers 193 from the passage 252 at the first end 248. Accordingly, the groove 262 may allow the fibers 193 to egress from the passage 252 through the first end 248 and allow the strength member 196 to egress from the passage 252 through the groove 262, such as to facilitate separation, handling, splicing, and access to the fibers 193 and mitigate interference from other portions of the cable 191.

Still various embodiments of the method may include positioning an end 297 of the outer jacket 197 within the passage 252. For instance, a user may extend the cable 191 through the passage 252 and egress through end 248, such as depicted from Fig. 4 to Fig. 5. The user may cut or otherwise separate the outer jacket 197 to access fibers 193, strength members 196, or other portions of the cable 191 within the outer jacket 197, such as depicted at Figs. 6-7. The user positions the fastener 188 around the fibers 193, such as through passage 282 as depicted in Fig. 7. The strength member 196 extends around fastener 188, such as to bypass passage 282 through which the fibers 193 are extended. The user may re-position the end 297 of the outer jacket 197 (e.g., the end 297 formed from cutting or otherwise accessing the fibers 193 within the outer jacket 197) into the passage 252 at the collar 210, such as depicted from Fig. 7 to Fig. 8. In various embodiments, the strength member 196 is positioned through groove 262 to allow the platforms 260, 286 to abut flush against one another. In other embodiments, the strength member 196 is positioned through slot 254 to allow the strength member 196 to extend through first end 248 while allowing separation from the fibers 193 extending from the passage 252 at the first end 248.

In various embodiments, boot 192 may extend over the threaded shank 250 of the collar 210 from the second end 249 to the platform 286 at the fastener 188, such as depicted in Fig. 2.

In some embodiments, slot 254 extends from the platform 260 toward both the first end 248 and the second end 249, such that either end 248, 249 may form an egress end of the passage 252. In still some embodiments, groove 262 extends on either or both sides of platform 260, such as to correspond to an extension of the slot 254 toward either end 248, 249, such as to allow either end of passage 252 to form an egress end.

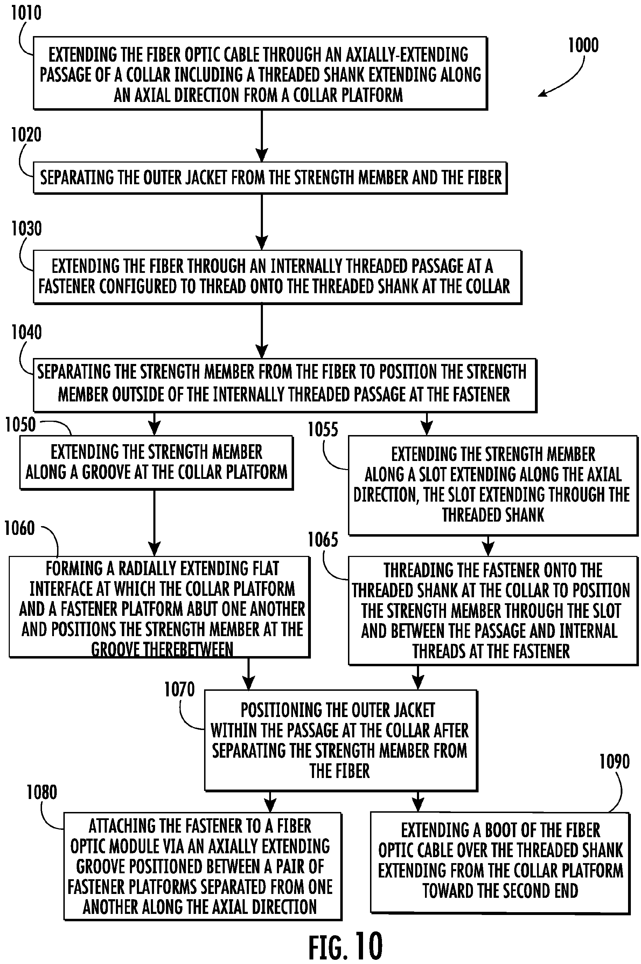

Referring to Fig. 10, a flowchart outlining steps of a method for cable retention and connector fastening for a fiber optic cable is provided (hereinafter, "method 1000"). Embodiments of the method 1000 may be performed with various embodiments of the fastener assembly 300 such as depicted and described herein.

Method 1000 includes at 1010 extending the fiber optic cable through an axially-extending passage of a collar including a threaded shank extending along an axial direction from a collar platform. In some embodiments, extending the fiber optic cable through the axially-extending passage of the collar includes extending the fiber optic cable through a second end and through the passage and egress through a first end.

Method 1000 includes at 1020 separating the outer jacket from the strength member and the fiber.

Method 1000 includes at 1030 extending the fiber through an internally threaded passage at a fastener configured to thread onto the threaded shank at the collar.

Method 1000 includes at 1040 separating the strength member from the fiber to position the strength member outside of the internally threaded passage at the fastener.

In some embodiments, method 1000 includes at 1050 extending the strength member along a groove at the collar platform. Method 1000 includes at 1060 forming a radially extending flat interface at which the collar platform and a fastener platform abut one another and positions the strength member at the groove therebetween. In some embodiments, threading the fastener onto the collar and extending the fiber along the axial direction from a second end through a first end.

In still some embodiments, method 1000 includes at 1055 extending the strength member along a slot extending along the axial direction, the slot extending through the threaded shank. Method 1000 includes at 1065 threading the fastener onto the threaded shank at the collar to position the strength member through the slot and between the passage and internal threads at the fastener.

In various embodiments, method 1000 includes at 1070 positioning the outer jacket within the passage at the collar after separating the strength member from the fiber.

In still various embodiments, method 1000 includes at 1080 attaching the fastener to a fiber optic module via an axially extending groove positioned between a pair of fastener platforms separated from one another along the axial direction.

In yet various embodiments, method 1000 includes at 1090 extending a boot of the fiber optic cable over the threaded shank extending from the collar platform toward the second end.

Embodiments of the assembly 300 provide structures and methods for cable retention to facilitate splicing and other work at the cable 191. Embodiments provided herein may mitigate shearing, crushing, stress buildup, or deterioration of portions of the cable 191. Groove 262 and slot 254 may facilitate separation of the strength member 196 from the fibers 193, such as to facilitate work performed at the fiber 193. Groove 262 may particularly promote routing and avoid damage to e-glass strength members or similar configurations. Slot 254 may particularly promote routing and avoid damage to aramid fiber strength members or similar configurations.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A fastener assembly (300) for a fiber optic cable (101), the fastener assembly (300) comprising:
a collar (210) comprising a threaded shank (250) extending along an axial direction (A) from a collar platform (260), the threaded shank (250) comprising a shank passage (252) formed therethrough from a first end (248) to a second end (249) along the axial direction (A), the collar (210) comprising a slot (254) extending along the axial direction (A) from the first end (248) toward the collar platform (260); and
a fastener (188) comprising an internally threaded fastener passage (282) configured to engage the threaded shank (250) at the collar (210), wherein the slot (254) is positioned between the shank passage (252) at the collar (210) and the fastener passage (282) at the fastener (188) when engaged to the threaded shank (250) at the collar (210).

2. A fastener assembly (300) accordingto claim 1, where a groove (262) is formed at the collar platform (260) extending radially outward from the shank passage (252).

3. A fastener assembly (300) according to claim 2, the fastener (188) comprising a fastener platform (286), wherein the fastener platform (286) and the collar platform (260) form a radially extending interface between the fastener platform (286) and the collar platform (260).

4. A fastener assembly (300) according to claim 3, wherein the groove (262) extends at a flat interface at which the fastener platform (286) and the collar platform (260) abut one another.

5. A fastener assembly (300) according to claim 3 or claim 4, wherein an axially extending groove (288) is formed between a pair of the fastener platforms (286, 286) separated along the axial direction (A).

6. A fastener assembly (300) according to any preceding claim, wherein the fastener (188) forms a nut comprising the internally threaded fastener passage (282).

7. A fastener assembly (300) according to any preceding claim, wherein the threaded shank (250) extends along the axial direction (A) toward the first end (248) and the second end (249) from the collar platform (260).

8. A fastener assembly (300) according to any preceding claim, wherein the collar platform (260) forms a polygonal head.

9. A method (1000) for cable retention and connector fastening for a fiber optic cable (191), the fiber optic cable (191) comprising an outer jacket (197) through which a strength member (196) and a fiber (193) extend, the method comprising:
extending (1010) the fiber optic cable (191) through an axially-extending collar passage (252) of a collar (210) comprising a threaded shank (250) extending along an axial direction (A) from a collar platform (260);
separating (1020) the outer jacket (197) from the strength member (196) and the fiber (193);
extending (1030) the fiber (193) through an internally threaded fastener passage (282) at a fastener (188) configured to thread onto the threaded shank (250) at the collar (210);
separating (1040) the strength member (196) from the fiber (193) to position the strength member (196) outside of the fastener passage (282);
extending (1050) the strength member (196) along a groove (262) at the collar platform (260); and
forming (1060) a radially extending flat interface at which the collar platform (260) and a fastener platform (286) abut one another and positions the strength member (196) at the groove (262) therebetween.

10. A method according to claim 9, the method comprising:
threading the fastener (188) onto the collar (210) and extending the fiber (193) along the axial direction (A) from a second end (149) through a first end (148).

11. A method (1000) for cable retention and connector fastening for a fiber optic cable (191), the fiber optic cable (191) comprising an outer jacket (197) through which a strength member (196) and a fiber (193) extend, the method comprising:
extending (1010) the fiber optic cable (191) through an axially-extending collar passage (252) of a collar (210) comprising a threaded shank (250) extending along an axial direction (A) from a collar platform (260);
separating (1020) the outer jacket (197) from the strength member (196) and the fiber (193);
extending (1030) the fiber (193) through an internally threaded fastener passage (282) at a fastener (188) configured to thread onto the threaded shank (250) at the collar (210);
separating (1040) the strength member (196) from the fiber (193) to position the strength member (196) outside of the fastener passage (282);
extending (1055) the strength member (196) along a slot (254) extending along the axial direction (A), the slot (254) extending through the threaded shank (250); and
threading (1065) the fastener (188) onto the threaded shank (250) at the collar (210) to position the strength member (197) through the slot (254) and between the fastener passage (282) and internal threads at the fastener (188).

12. A method according to any of claims 9 to 11, the method comprising:
positioning (1070) the outer jacket (197) within the collar passage (252) after separating the strength member (196) from the fiber (193).

13. A method according to any of claims 9 to 12, the method comprising:
attaching (1080) the fastener (188) to a fiber optic module via an axially extending groove (288) positioned between a pair of fastener platforms (286, 286) separated from one another along the axial direction (A).

14. A method according to any of claims 9 to 13, the method comprising:
extending (1090) a boot (192) of the fiber optic cable (191) over the threaded shank (250) extending from the collar platform (260) toward the second end (249).

15. A method according to any of claims 9 to 14, wherein extending the fiber optic cable (191) through the collar passage (252) comprises extending the fiber optic cable (191) through a second end (249) and through the collar passage (252) and egress through a first end (248).
